# EUROPÄISCHE PATENTSCHRIFT

(11) **EP 2 801 126 B1**
(45) Veröffentlichungstag und Bekanntmachung des Hinweises auf die Patenterteilung: **16.09.2015**
(21) Anmeldenummer: 12805971.4
(22) Anmeldetag: 30.11.2012
(51) Int. Cl.: H01R 4/62, H01R 9/05, H01R 43/02, B26D 7/08, B23K 20/10, H01R 101/00

(54) **ELEKTRISCHES KABEL, VERFAHREN ZUM HERSTELLEN EINES ELEKTRISCHEN KABELS SOWIE SCHWEISSVORRICHTUNG ZUM HERSTELLEN EINES ELEKTRISCHEN KABELS**
ELECTRIC CABLE, METHOD FOR PRODUCING AN ELECTRIC CABLE, AND WELDING DEVICE FOR PRODUCING AN ELECTRIC CABLE
CÂBLE ÉLECTRIQUE, PROCÉDÉ DE FABRICATION D'UN CÂBLE ÉLECTRIQUE ET DISPOSITIF DE SOUDAGE POUR FABRIQUER UN CÂBLE ÉLECTRIQUE

(30) Priorität: 06.01.2012 DE 102012000137
(43) Veröffentlichungstag der Anmeldung: 12.11.2014
(73) Patentinhaber: Auto-Kabel Management GmbH, 79688 Hausen i.W. (DE)
(72) Erfinder: LIENERT, Andreas, 41844 Wegberg-Arsbeck (DE); MARTENS, Sebastian, 47638 Straelen (DE)
(74) Vertreter: Cohausz & Florack
(86) Internationale Anmeldenummer: PCT/EP2012/074065
(87) Internationale Veröffentlichungsnummer: WO 2013/102522

(56) Entgegenhaltungen:
- EP-A2- 1 466 709
- WO-A1-97/04500
- WO-A1-2011/152415
- DE-A1- 3 342 996
- DE-U1- 29 813 964

## Beschreibung

Der Gegenstand betrifft ein elektrisches Kabel sowie ein Verfahren zum Herstellen eines elektrischen Kabels als auch eine Schweißvorrichtung zum Herstellen eines elektrischen Kabels. Insbesondere betrifft der Gegenstand die Möglichkeit der Kontaktierung von elektrischen Schirmungen bei Hochvoltkabeln, insbesondere bei Hochvoltkabeln im Bereich der Hybrid- oder Elektrofahrzeuge.

Die Elektrifizierung von Kraftfahrzeugen erfordert im Vergleich zu herkömmlichen Fahrzeugen mit Verbrennungsmotoren eine Vielzahl von Hochvoltleitungen. Diese Hochvoltleitungen verbinden insbesondere Batterien mit Elektromotoren und führen Spannungen bei 100V und mehr. In Fällen, in denen bisher 12V Leitungen eingesetzt wurden, konnten elektrische Schirmungen vernachlässigt werden. Dies ist bei Hochvoltleitungen anders, da aufgrund der Spannungen, eine Beeinflussung von angrenzenden elektrischen oder elektronischen Komponenten durch elektromagnetische Strahlung zu befürchten ist. Aus diesem Grunde muss eine elektrische Schirmung das komplette Kabel umgeben. An seinen Enden muss die elektrische Schirmung sicher mit der Fahrzeugmasse verbunden werden können. Hierbei muss sichergestellt werden, dass die Kontaktierung der Schirmung mit der Fahrzeugmasse allen elektrischen Anforderungen genügt und mechanisch stabil Anschlussstücken kann es bei zu hoher Verpressung zu abgescherten Schirmungsdrähten und unzureichender Kontaktierung kommen. Bei einer zu geringen Verpressung kann es zu einer unzureichenden Kontaktierung kommen. Sowohl eine unzureichende Kontaktierung als auch abgescherte Schirmungsdrähte beeinflussen die elektrische Kontaktierung des Schirmgeflechtes mit der Fahrzeugmasse, so dass hohe Übergangswiderstände entstehen. Außerdem kann durch eine mangelhafte Kontaktierung die Schirmung elektromagnetisch unzureichend sein. Schließlich muss sichergestellt werden, dass die Schirmung selbst im Betrieb nicht mit anderen, spannungsführenden Teilen in Kontakt kommt und dadurch Störungen entstehen.

JP-2000 032 626 wird als nächstliegender Stand der Technik gegenüber dem Gegenstand des Anspruchs 1 angesehen.

Aus diesem Grunde lag dem Gegenstand die Aufgabe zugrunde, ein elektrisches Kabel sowie ein Verfahren zur Herstellung eines elektrischen Kabels zur Verfügung zu stellen, welches eine sichere elektromagnetische Schirmung durch eine elektrische Kontaktierung einer Schirmung eines Innenleiters ermöglicht.

Diese Aufgabe wird durch ein elektrisches Kabel nach Anspruch 1 sowie ein Verfahren nach Anspruch 6 und sowie eine Verwendung nach Anspruch 9 gelöst.

Zur Kontaktierung der Schirmung eines elektrischen Kabels mit einer Schirmübergabe wird vorgeschlagen, dass eine Hülse über die abisolierte Schirmung des Kabels geschoben wird. Hierbei wird die Hülse soweit über das Kabel geschoben, dass nachdem die Hülse in ihre Endposition geschoben wurde, ein Teil der Schirmung aus der Hülse hinaus in Richtung des Endes des Kabels ragt. Anschließend wird dieser über das Ende der Hülse in Richtung des Endes des Kabels hinausragende Teil der Schirmung über die Hülse zurückgeschlagen bzw. gestülpt. Anschließend wird der so über die Hülse gestülpte Teil der Schirmung intermetallisch mit der Hülse verbunden. Eine intermetallische Verbindung kann vorzugsweise eine stoffschlüssige Verbindung zwischen der Hülse und der Schirmung sein.

Vorzugsweise ist die Hülse in ihrem Aussendurchmesser einer herkömmlichen Schirmanbindung (Schirmübergabe, Anschlussbuchse etc.) angepasst, so dass die Hülse ohne Weiteres in die Schirmanbindung eingesteckt werden kann und somit eine elektrische Verbindung zwischen der Schirmung und der Schirmanbindung über die Hülse ermöglicht ist.

Darüber hinaus ist die Hülse bevorzugt aus einem Nichteisenmetall bzw. Legierungen davon. Insbesondere kann die Hülse aus Kupfer oder Legierung davon bzw. Aluminium oder Legierung davon gebildet sein. Vorzugsweise ist die Schirmung aus Kupfer. In diesem Fall ist die Hülse ebenfalls vorzugsweise aus Kupfer zu gestalten. Andererseits kann, insbesondere zur Gewichtseinsparung, Aluminium als Material für die Schirmung verwendet werden. Bei der Verwendung von Aluminium entstehen jedoch nicht leitende Aluminiumoxidschichten auf der Oberfläche der Schirmung. Vorzugsweise wird vorgeschlagen, dass die Hülse insbesondere in diesem Fall aus Aluminium oder Legierungen davon gebildet ist, da dadurch Kontaktkorrosion vermieden wird.

Durch die Verwendung der Hülse ist es möglich, die Schirmung sicher mit einer Schirmübergabe, beispielsweise einer Steckverbindung, zu kontaktieren. Dabei ist sichergestellt, dass die gesamte Schirmung mittels der Hülse elektrisch als auch mechanisch sicher mit der Schirmanbindung kontaktiert ist.

Gemäß einem Ausführungsbeispiel ist die Schirmung ein Metallgeflecht, eine Metallfolie oder eine Kombination aus beiden. Sowohl ein Metallgeflecht als auch eine Metallfolie sind derart flexibel, dass sich diese, sobald die Hülse über das Ende des Kabels hinausgeschoben wurde, über die Hülse zurückgeschlagen lassen. Anschließend kann das Geflecht bzw. die Folie stoffschlüssig mit der Hülse verbunden werden. Die Verbindung der Schirmung mit der Hülse geschieht vorzugsweise in einem dem Ende des Kabels zugewandten Bereich des Hülse. Wie bereits erläutert, ist die stoffschlüssige Verbindung zwischen der Hülse und der Schirmung auf vorzugsweise nur einen Teil der Hülse beschränkt. Dieser die intermetallische Verbindung zwischen Hülse und Schirmung führende Teil der Hülse ist vorzugsweise dem Ende des Kabels zugewandt. Um das Einschieben der Hülse in eine Buchse, beispielsweise die Buchse einer Schirmübergabe, zu erleichtern und gleichzeitig eine sichere elektrische Kontaktierung der Hülse mit der Buchse zu gewährleisten, ist es vorteilhaft, wenn die Hülse sowohl im Bereich der intermetallischen Verbindung mit der Schirmung als auch in allen anderen Bereichen einen einheitlichen Durchmesser und/oder Umfang und/oder Querschnitt aufweist. Aus diesem Grunde ist es nach Anspruch 1 unerlässlich, dass die Hülse einen stufenförmigen Versatz hat. Dieser stufenförmige Versatz ist derart, dass ein erster Bereich der Hülse einen ersten Durchmesser und/oder Umfang hat und ein zweiter Bereich der Hülse einen kleineren Durchmesser hat. Dieser zweite Bereich ist dem Ende des Kabels zugewandt, wenn die Hülse auf das Kabel aufgeschoben worden ist. Mit Hilfe dieses Versatzes ist es möglich, auch im montierten Zustand einen im Wesentlichen einheitlichen Querschnitt der mit Schirmung versehenen Hülse zu erhalten. Es kann verhindert werden, dass der zurückgeschlagene Teil der Schirmung aus dem äußeren Umfang der Hülse herausragt.

Vorzugsweise weist die Hülse darüber hinaus eine umlaufende Nut oder einen umlaufenden Freistich auf. Diesen dienen vorzugsweise zum Abtrennen der überstehenden Schirmung. Insbesondere ist die umlaufende Nut bzw. der Freistich im Bereich des Versatzes angeordnet. Vorzugsweise ist die umlaufende Nut bzw. der Freistich unmittelbar an dem Versatz, insbesondere an dem Übergang zwischen dem ersten Umfang und dem zweiten Umfang angeordnet.

Gemäß einem vorteilhaften Ausführungsbeispiel wird vorgeschlagen, dass der über die Hülse umgeschlagene Teil der Schirmung zumindest im Bereich des zweiten Durchmessers an der Hülse anliegt und vorzugsweise im Bereich des zweiten Durchmessers intermetallisch vorzugsweise mit der Hülse verbunden ist.

Wie bereits erwähnt, wird die Schirmung vorzugsweise im Bereich des zweiten Umfangs mit der Hülse verbunden. Die durch das Zurückschlagen der Schirmung bedingte Vergrößerung des Umfangs in diesem Bereich der Hülse wird dadurch kompensiert, dass der zweite Umfang kleiner ist als der erste Umfang. Hierdurch kann gewährleistet sein, dass der maximale Umfang der Hülse samt Schirmung durch den ersten Umfang gewährleistet ist. Dieser erste Umfang ist vorzugsweise angepasst an den Umfang einer Schirmübergabe, insbesondere einer Buchse einer Schirmübergabe, so dass das Ende des Kabels mit Hilfe der Hülse sicher mit der Schirmübergabe elektrisch kontaktiert werden kann. Vorzugsweise ist die Schirmung im Bereich des zweiten Umfangs intermetallisch mit der Hülse verbunden. Vorzugsweise ist die Schirmung ausschließlich im Bereich des zweiten Durchmessers mit der Hülse intermetallisch, insbesondere stoffschlüssig verbunden.

Um zu verhindern, dass Teile der Schirmung aus dem Umfang der Hülse hinausragen, wird vorgeschlagen, dass der zurückgeschlagene Teil der Schirmung abgelängt wird. Dieses Ablängen geschieht vorzugsweise im Bereich der Nut. Ist die Nut im Bereich des Übergangs zwischen erstem und zweiten Umfang angeordnet, so wird sichergestellt, dass die Schirmung im Bereich des zweiten Umfangs an der Hülse anliegt und erst am Ende dieses Teils abgelängt ist.

Gemäß einem Ausführungsbeispiel wird vorgeschlagen, dass der über die Hülse zurückgeschlagene Teil der Schirmung zumindest im Bereich des zweiten Umfangs mit der Hülse mittels Reibschweißen, Widerstandsschweißen oder Ultraschallschweißen, insbesondere mittels Ultraschallrollnahtschweißen oder Widerstandsrollnahtschweißen, intermetallisch, insbesondere stoffschlüssig, verbunden ist. Mittels des Ultraschallschweißens ist es in besonders einfacher Weise möglich, die Schirmung mit der Hülse zu verbinden. Insbesondere bei der Verwendung eines Schirmgeflechts, insbesondere bei der Verwendung eines Aluminiumschirmgeflechts, wird mit Hilfe der Ultraschallschweißung sichergestellt, dass vor dem Verschweißen die Aluminiumoxidschicht von der Schirmung und Hülse abplatzt und anschließend eine saubere Kontaktierung von Schirmung und Hülse gewährleistet ist.

Wie bereits erläutert, ist auch ein Verfahren zum Herstellen eines elektrischen Kabels beansprucht. Hierbei wird bevorzugt, dass nachdem eine Sekundärisolation entfernt worden ist und die Schirmung somit freiliegt, zunächst eine Hülse über die abisolierte Schirmung geschoben wird. Hierbei wird die Hülse vorzugsweise soweit über die abisolierte Schirmung geschoben, dass an dem Ende der Hülse, das in Richtung des Endes des Kabels weist, die Schirmung über die Hülse hinausragt. Insbesondere ist die Sekundärisolation über eine Länge entfernt, die größer ist, als die Länge der Hülse. Dann kann die Hülse über das Ende des Kabels soweit geschoben werden, bis diese an der Sekundärisolation anschlägt, oder diese teilweise überragt. In dieser Endposition ragt das Ende des Kabels samt Schirmung auf der anderen Seite der Hülse über die Hülse hinaus. Dieser überstehende, über die Hülse hinausragende Teil kann anschließend zurückgeschlagen werden und über die Hülse gelegt werden.

Schließlich wird vorgeschlagen, dass dieser zurückgeschlagene Teil der Schirmung intermetallisch mit der Hülse verbunden wird. Diese intermetallische Verbindung ist vorzugsweise eine stoffschlüssige Verbindung zwischen Schirmung und Hülse.

Gemäß einem Ausführungsbeispiel wird vorgeschlagen, dass die Schirmung mit der Hülse mittels Ultraschallschweißen intermetallisch verbunden ist. Bei der Verwendung von Ultraschallschweißen lassen sich insbesondere Aluminiumschirmungen mit Aluminiumhülsen elektrisch sicher miteinander verschweißen.

Beim Verschweißen kann eine Relativbewegung zwischen einer Sonotrode und der Hülse entlang eines Kreisbogens vorteilhaft sein. Es ist möglich, dass die Sonotrode stationär angeordnet ist und die Hülse samt Leitung orbital um die Sonotrode herumgeführt wird. Hierbei kann die Sonotrode sich um ihre Längsachse drehen. Auch ist es möglich, dass die Sonotrode stationär ist und die Hülse samt Leitung ebenfalls stationär ist, jedoch um ihre eigene Längsachse gedreht wird. Dies ermöglicht es auch, eine Verschweißung der Hülse mit der Schirmung entlang eines Kreisbogens herzustellen. Auch hierbei kann die Sonotrode weiterhin um ihre eigene Längsachse gedreht werden.

Schließlich ist es auch möglich, dass die Leitung samt Hülse stationär ist und lediglich die Sonotrode orbital um die Leitung herum geführt wird.

Denkbar ist auch, dass zwei oder mehr Sonotroden in Winkelabständen, vorzugsweise äquidistanten Winkelabständen zueinander um die Hülse bzw. Leitung angeordnet werden und jeweils nur einen Teilkreisbogen um das Kabel herum geführt werden.

Auch ist es möglich, dass während des Verschweißens in einem einzigen Arbeitsschritt der Schweißkopf derart um die Hülse herum geführt wird, dass dieser gleichzeitig die Hülse mit der Schirmung verschweißt und die Schirmung ablängt. Dies kann vorzugsweise durch Schneiden der Schirmung entlang der Hülse erfolgen.

Zum intermetallischen Verbinden der Hülse mit der Schirmung wird darüber hinaus eine Schweißvorrichtung vorgeschlagen. Diese Schweißvorrichtung weist eine um ihre Längsachse schwenk- bzw. drehbar gelagerte Ultraschallsonotrode auf. Mit Hilfe dieser Ultraschallsonotrode wird zum Einen die Schirmung mit der Hülse intermetallisch verbunden. Gleichzeitig kann die Ultraschallsonotrode beim Verschweißen der Hülse mit der Schirmung die Schirmung ablängen. Aus diesem Grunde weist die Ultraschallsonotrode ein im Längsschnitt wellenförmiges Profil auf. Dieses wellenförmige Profil dient zur intermetallischen Verbindung der Schirmung mit der Hülse. Andererseits weist die Ultraschallsonotrode an einem Ende eine Schneidklinge auf. Diese Schneidklinge kann so geformt sein, dass diese in die um die Hülse umlaufende Nut eingreift und dabei die Schirmung ablängt.

Bevorzugt ist, wenn die Ultraschallsonotrode während des Schweißprozesses parallel zur Längsachse schwingt und dabei Schirmung und Hülse intermetallisch miteinander verbindet.

Die zuvor beschriebenen Merkmale lassen sich frei miteinander kombinieren. Die zuvor beschriebenen als auch in den abhängigen und unabhängigen Ansprüchen beanspruchten Merkmale sind frei miteinander kombinierbar und können dabei gleichzeitig erfinderisch sein. Insbesondere kann unter Umgehung von einzelnen oder allen Merkmalen der unabhängigen Ansprüche die Kombination der beschriebenen Merkmale erfinderisch sein.

Nachfolgend wird der Gegenstand anhand einer Ausführungsbeispiele zeigenden Zeichnung näher erläutert.

In der Zeichnung zeigen:
- Fig. 1: ein Längsschnitt einer Hülse;
- Fig. 2: ein Längsschnitt eines Kabels mit einer Hülse;
- Fig. 3: schematisch eine Ansicht eines Schweißprozesses;
- Fig. 4: eine Detailansicht eines Schweißkopfes;
- Fig. 5a-c: verschiedene Möglichkeiten des Verschweißens durch Orbitalbewegung zwischen Sonotrode und Hülse.

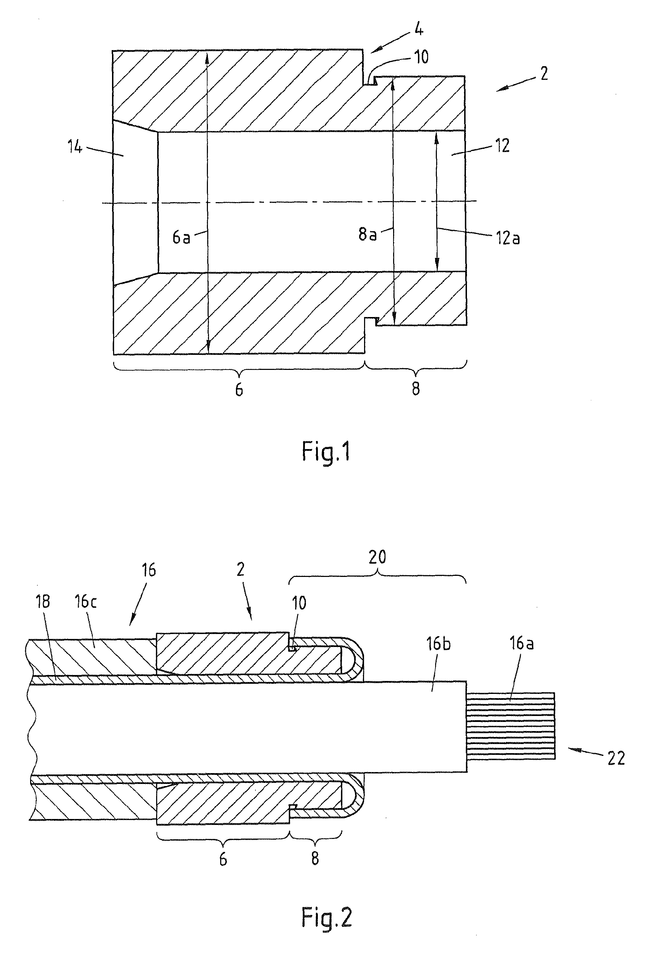

Fig. 1 zeigt eine Hülse 2 mit einem Versatz 4. Der Versatz 4 teilt die Hülse in einen ersten Bereich 6 und einen zweiten Bereich 8. Der erste Bereich 6 hat einen ersten Durchmesser 6a. Der zweite Bereich 8 hat einen zweiten Durchmesser 8a. Im Bereich des Versatzes 4 zwischen dem ersten Bereich 6 und dem zweiten Bereich 8 ist eine umlaufende Nut 10 zu erkennen.

Die Hülse 2 hat eine Durchgangsöffnung 12 zur Aufnahme eines Kabels mit einem Innenleiter, einer Primärisolation und einer Schirmung. Vorzugsweise entspricht der Durchmesser 12a der Durchgangsöffnung 12 im Wesentlichen dem Durchmesser eines elektrischen Kabels samt Schirmung, jedoch ohne Sekundärisolierung.

Zu erkennen ist ferner, dass an einem Ende der Durchgangsöffnung 12 diese angefast ist. Die Fase 14 ermöglicht es, die Hülse 2 besonders leicht über das Kabel zu schieben.

Der erste Durchmesser 6a ist vorzugsweise entsprechend einem Durchmesser einer Schirmaufnahme. Vorzugsweise entspricht der Durchmesser 6a dem Innendurchmesser eines Pressfittings zum Verpressen der Hülse 2 mit einer Schirmübergabe.

Fig. 2 zeigt die Hülse 2, die bereits auf ein elektrisches Kabel 16 aufgeschoben ist. Das elektrische Kabel 16 ist gebildet durch einen Innenleiter 16a, eine den Innenleiter 16a isolierende Primärisolation 16b und eine die Primärisolation 16b umgebenden Schirmung 18. Die Schirmung 18 ist durch eine Sekundärisolation 16c isoliert. Die Primärisolation 16b als auch die Sekundärisolation 16c kann aus Kunststoff, insbesondere einem isolierenden Kunststoff, beispielsweise PVC, Polyamid oder Silikon sein.

Der Innenleiter 16a kann aus Aluminium oder Kupfer sowie aus jeweiligen Legierungen daraus gebildet sein.

Die Schirmung 18 kann ein Metallgeflecht oder eine Metallfolie sein. Auch ist es möglich, dass eine Folie und ein Geflecht kombiniert als Schirmung 18 fungieren. Die Schirmung 18 kann aus Aluminium oder Kupfer oder einer jeweiligen Legierung daraus gebildet sein. Vorzugsweise ist die Schirmung 18 aus dem selben Material wie der Innenleiter 16a.

Zu erkennen ist, dass das Kabel 16 in einem Bereich 20 abisoliert ist, derart, dass die Sekundärisolation 16c entfernt ist. Der Bereich 20 weist in Richtung des Endes 22 des Kabels 16.

Im Bereich 20 liegt die Schirmung 18 frei. Ferner ist zu erkennen, dass über die freigelegte Schirmung 18 die in Fig. 1 gezeigte Hülse 2 geschoben ist. Die Hülse 2 ist im Bereich 20 soweit auf das Kabel 16 aufgeschoben, dass diese an die vorhandene Sekundärisolation 16c anschlägt. Die Länge der Hülse 2 ist kürzer als die Länge des Bereichs 20, so dass ein in Richtung des Endes 22 des Kabels 16 weisender Bereich über die Hülse 2 hinaus steht und dort die Schirmung 18 freiliegt. Der freiliegende Bereich der Schirmung 18 wird, wie in Fig. 2 dargestellt, über die Hülse 2 zurückgeschlagen, so dass die Schirmung 18 im zweiten Bereich 8 auf der Hülse 2 aufliegt. Anschließend wird die Hülse 2 im zweiten Bereich 8 mit der Schirmung 18 verschweißt, wobei gleichzeitig der in Richtung des ersten Bereichs 6 weisende Teil der Schirmung 18 im Bereich der umlaufenden Nut 10 abgelängt wird. Hierdurch wird verhindert, dass die Schirmung 18 über den zweiten Bereich 8 hinausragt.

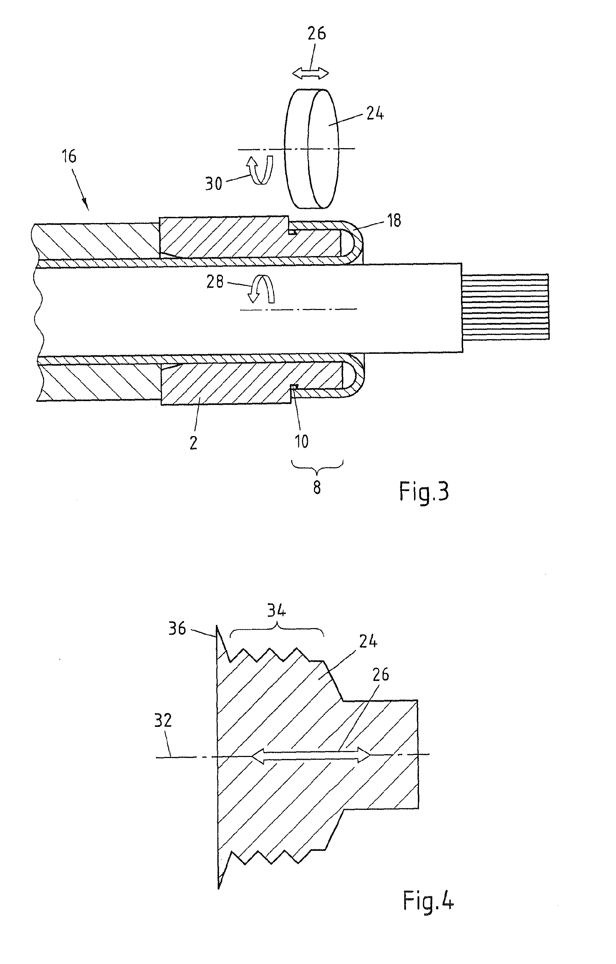

Ein Verschweißen ist in Fig. 3 dargestellt. Fig. 3 zeigt, das in Fig. 2 gezeigte Kabel 16 mit der in Fig. 1 gezeigten Hülse 2. Nachdem die Schirmung 18 um die Hülse 2 im Bereich des zweiten Bereichs 8 zurückgeschlagen wurde, wird das Kabel 16 an einen Rollnahtschweißkopf 24 herangeführt. Der Rollnahtschweißkopf 24 wird auf die Schirmung 18 im zweiten Bereich 8 aufgedrückt. Anschließend wird der Rollnahtschweißkopf 24 in eine Ultraschallschwingung in Schwingrichtung 26 angeregt. Das Kabel 16 wird um seine Längsachse in Drehrichtung 28 unter dem Rollnahtschweißkopf 24 gedreht. Gleichzeitig dazu wird der Rollnahtschweißkopf 24 in Drehrichtung 30 gedreht. Zumindest während einer Umdrehung des Kabels 16 um 360° wird der Rollnahtschweißkopf 24 auf die Schirmung 18 im Bereich 8 aufgedrückt und mittels der Ultraschallschwingung in Schwingrichtung 26 wird die Schirmung 18 mit der Hülse 2 im zweiten Bereich 8 verschweißt. Während des Verschweißens wird die Schirmung 18 im Bereich der Nut 10 durch eine Schneidklinge am Rollnahtschweißkopf 24 abgelängt.

Fig. 4 zeigt ein Profil eines Rollnahtschweißkopfes 24 in Längsrichtung 32. Zu erkennen ist, dass der Rollnahtschweißkopf 24 einen wellenförmigen Bereich 34 aufweist. Dieser wellenförmige Bereich 34 kann zickzackförmig oder dergleichen geformt sein. Der wellenförmige Bereich 34 wird beim Verschweißen auf die Schirmung 18 aufgepresst und der Rollnahtschweißkopf 24 wird entlang der Schwingungsrichtung 26 angeregt. Während des Verschweißens wird der Rollnahtschweißkopf 24 um die Umfangsrichtung des Kabels 16 bzw. der Hülse 2 bewegt. Hierbei greift ein am Ende des Rollnahtschweißkopfes 24 angeordnetes Schneidmesser 36 in die Nut 10 ein. Mittels der Schneidmesser 36 wird die Schirmung 18 im Bereich der Nut 10 durchtrennt. Hierdurch entsteht eine saubere Abtrennung der Schirmung 18 im Bereich der Nut 10.

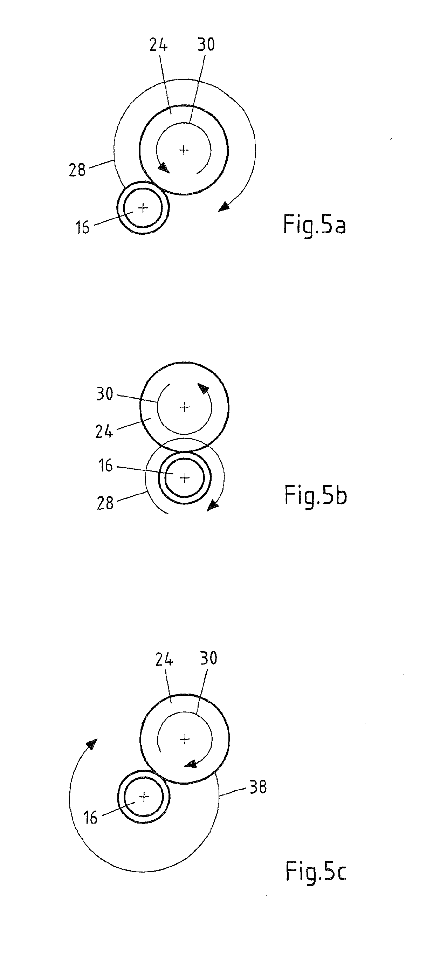

Die Figs. 5a-c zeigen verschiedene Relativbewegungen zwischen Kabel 16 und Rollnahtschweißkopf 24. In der Fig. 5a ist zu erkennen, dass der Rollnahtschweißkopf 24 stationär ist und in Drehrichtung 30 um seine Längsachse gedreht wird. Gleichzeitig dazu wird das Kabel 16 in Drehrichtung 28 um die Längsachse des Rollnahtschweißkopfes 24 orbital herum geführt.

Fig. 5b zeigt eine weitere Möglichkeit des Verschweißens, bei der der Rollnahtschweißkopf 24 stationär ist und um seine Längsachse in Drehrichtung 30 gedreht wird. Das Kabel 16 ist ebenfalls stationär und wird entlang der Drehrichtung 28 seine Längsachse gedreht. Hierdurch wird ebenfalls ein Verschweißen der Schirmung 18 an der Hülse 2 entlang der gesamten Umfangsrichtung ermöglicht.

Fig. 5c zeigt eine weitere Möglichkeit des Verschweißens. Hierbei ist das Kabel 16 stationär. Der Rollnahtschweißkopf 24 wird zum einen um seine eigene Achse entlang der Drehrichtung 30 gedreht und gleichzeitig entlang der Drehrichtung 38 orbital um die Längsachse des Kabels 16 herum geführt.

Mit Hilfe des gezeigten Verfahrens und der gezeigten Schweißvorrichtung ist es möglich, ein Kabelende sicher mit einer Hülse zu versehen, wobei die Hülse eine Kontaktierung mit einer Schirmung des Kabels erleichtert.

## Patentansprüche

1. Elektrisches Kabel, insbesondere Hochvoltkabel, insbesondere zur Verwendung in einem Kraftfahrzeug, insbesondere einem Hybrid- oder Elektrofahrzeug, mit
- einem Innenleiter (16a),
- einer den Innenleiter (16a) umschließenden Primärisolation (16b),
- einer die Primärisolation (16b) umschließenden elektrischen Schirmung (18),
- einer die Schirmung (18) umschließenden Sekundärisolation (16c),
- wobei an zumindest einem Ende des Kabels (16) die Sekundärisolation (16c) entfernt ist, so dass die Schirmung (18) abisoliert ist,
- eine Hülse (2) über die abisolierte Schirmung (18) geschoben ist, und
- ein in Richtung des Endes (22) des Kabels (16) über die Hülse (2) hinausragender Teil der Schirmung (18) über die Hülse (2) zurückgeschlagen ist,
**dadurch gekennzeichnet, dass**
- dass die Hülse (2) einen stufenförmigen Versatz (4) aufweist, derart, dass die Hülse (2) einen ersten Durchmesser (6a) an einer ersten Seite (6) und einen zweiten, kleineren Durchmesser (8a) als dem ersten Durchmesser (6a) an einer dem Ende (22) des Kabels (16) zugewandten zweiten Seite (8) hat,
- dass der über die Hülse (2) gestülpte Teil der Schirmung (18) intermetallisch mit der Hülse (2) verbunden ist.

2. Kabel nach Anspruch 1, **dadurch gekennzeichnet, dass** die Schirmung (18) ein Metallgeflecht oder eine Metallfolie ist und/oder dass die Schirmung (18) aus einem Nichteisenmetall oder Legierungen davon, insbesondere aus Kupfer oder Legierungen davon oder Aluminium oder Legierungen davon gebildet ist.

3. Kabel nach einem der vorangehenden Ansprüche, **dadurch gekennzeichnet, dass** die Hülse (2) eine umlaufende Nut (10), insbesondere im Bereich des Versatzes (4), aufweist und/oder dass der über die Hülse (2) zurückgeschlagene Teil der Schirmung (18) im Bereich der Nut (10) abgelängt ist.

4. Kabel nach einem der vorangehenden Ansprüche, **dadurch gekennzeichnet, dass** der über die Hülse (2) zurückgeschlagene Teil der Schirmung (18) zumindest im Bereich des zweiten Durchmessers (8c) an der Hülse (2) anliegt und vorzugsweise im Bereich des zweite Durchmessers (8a) intermetallisch mit der Hülse (2) verbunden ist.

5. Kabel nach einem der Ansprüche 3 bis 4, **dadurch gekennzeichnet, dass** der über die Hülse (2) zurückgeschlagene Teil der Schirmung (18) zumindest im Bereich des zweiten Durchmessers (18a) mit der Hülse (2) mittels Reibschweißen, Widerstandsschweißen oder Ultraschallschweißen, insbesondere mittels Ultraschallrollnahtschweißen oder Widerstandsrollnahtschweißen intermetallisch verbunden ist.

6. Verfahren zum Herstellen eines elektrischen Kabels, insbesondere Hochvoltkabel, insbesondere zur Verwendung in einem Kraftfahrzeug, mit den Schritten
- Abisolieren einer eine Schirmung umschließenden Sekundärisolation an zumindest einem Ende des Kabels, **gekennzeichnet durch**
- Schieben einer Hülse über die abisolierte Schirmung, wobei die Hülse einen stufenförmigen Versatz aufweist, derart, dass die Hülse einen ersten Durchmesser an einer ersten Seite und einen zweiten, kleineren Durchmesser als dem ersten Durchmesser an einer dem Ende des Kabels zugewandten zweiten Seite hat,
- Umschlagen des über die Hülse hinausragenden Teils der Schirmung an dem Ende des Kabels über die Hülse und
- intermetallisches Verbinden des über die Hülse umgeschlagenen Teils der Schirmung mit der Hülse.

7. Verfahren nach Anspruch 6, **dadurch gekennzeichnet, dass** die Schirmung mit der Hülse mittels Ultraschallschweißen oder Widerstandsschweißen intermetallisch verbunden wird.

8. Verfahren nach Anspruch 7, **dadurch gekennzeichnet, dass** zum intermetallischen Verbinden eine Ultraschallsonotrode oder Widerstandsschweißelektrode und die Hülse entlang eines Kreisbogen umeinander herum geführt werden und/oder dass vorzugsweise dabei gleichzeitig der über die Hülse umgeschlagene Teil der Schirmung durch die Ultraschallsonotrode oder die Widerstandsschweißelektrode abgelängt wird.

9. Verwendung eines elektrisches Kabel nach Anspruch 1 in einem Hybrid- oder Elektrofahrzeug.

## Claims

1. Electric cable, in particular a high-voltage cable, in particular for use in a motor vehicle, in particular a hybrid or electric vehicle, having
- an inner conductor (16a),
- a primary isolation (16b) surrounding the inner conductor (16a),
- an electric shield (18) surrounding the primary isolation (16b), and
- a secondary isolation (16c) surrounding the shield (18),
- wherein at least at one end of the cable (16) the secondary isolation (16c) is removed so that the shield (18) is stripped,
- a sleeve (2) is pushed over the stripped shield (18),
- a part of the shield (18) protruding beyond the sleeve (2) in the direction of the end (22) is folded back over the sleeve (2),
**characterized in that**
- the sleeve (2) has a step-like offset (4) such that the sleeve (2) has a first diameter (6a) at a first side (6) and a second, smaller diameter (8a) than the first diameter (6a) at a second side (8) facing towards the end (22) of the cable (16)
- **in that** the part of the shield (18) that is put over the sleeve (2) is intermetallically connected to the sleeve (2).

2. Cable according to claim 1, **characterized in that** the shield (18) is a metal braid or a metal foil and/or **in that** the shield (18) is formed from a non-ferrous metal or alloys thereof, in particular from copper or alloys thereof or aluminium or alloys thereof.

3. Cable according to one of the preceding claims, **characterized in that** the sleeve (2) has a circumferential groove (10), in particular in the region of the offset (4), and/or **in that** the part of the shield (18) that is folded back over the sleeve (2) is cut to length in the region of the groove (10).

4. Cable according to one of the preceding claims, **characterized in that** the part of the shield (18) that is folded back over the sleeve (2) bears against the sleeve (2) at least in the region of the second diameter (8c) and preferably is intermetallically connected to the sleeve (2) in the region of the second diameter (8a).

5. Cable according to one of claims 3 to 4, **characterized in that** the part of the shield (18) that is folded back over the sleeve (2) is intermetallically connected to the sleeve (2) at least in the region of the second diameter (18a) by means of friction welding, resistance welding or ultrasonic welding, in particular by means of ultrasonic roll seam welding or resistance roll seam welding.

6. Method for producing an electric cable, in particular a high-voltage cable, in particular for use in a motor vehicle, comprising the steps
- stripping, at least at one end of the cable, a secondary isolation that surrounds a shield,
**characterized by**
- pushing a sleeve over the stripped shield, wherein the sleeve has a step-like offset such that the sleeve has a first diameter at a first side and a second, smaller diameter than the first diameter at a second side facing towards the end of the cable
- folding the part of the shield that protrudes beyond the sleeve back over the sleeve at the end of the cable, and
- intermetallically connecting to the sleeve the part of the shield that is folded back over the sleeve.

7. Method according to claim 6, **characterized in that** the shield is intermetallically connected to the sleeve by means of ultrasonic welding or resistance welding.

8. Method according to claim 7, **characterized in that,** for the intermetallic connection, an ultrasonic sonotrode or resistance welding electrode and the sleeve are guided around one another along an arc of a circle and/or **in that** preferably at the same time the part of the shield that is folded back over the sleeve is cut to length by the ultrasonic sonotrode or the resistance welding electrode.

9. Use of an electrical cable according to claim 1 in a hybrid vehicle or an electric vehicle.

## Revendications

1. Câble électrique, en particulier câble haute tension, en particulier pour l'utilisation dans un véhicule automobile, en particulier dans un véhicule automobile hybride ou électrique, avec
- un conducteur intérieur (16a),
- une isolation primaire (16b) qui entoure le conducteur intérieur (16a),
- un blindage électrique (18) qui entoure l'isolation primaire (16b),
- une isolation secondaire (16c) qui entoure le blindage (18),
- sachant que l'isolation secondaire (16c) est enlevée à au moins une extrémité du câble (16), de telle manière que le blindage (18) soit dénudé,
- qu'une douille (2) est glissée sur le blindage (18) dénudé et
- qu'une partie du blindage (18), qui fait saillie au-delà de la douille (2) dans la direction de l'extrémité (22) du câble (16), est retournée sur la douille (2), **caractérisé en ce que**
- la douille (2) est dotée d'un premier décalage en forme de gradin (4), de sorte que la douille (2) présente un premier diamètre (6a) sur un premier côté (6) et un deuxième diamètre (8a), plus petit que le premier diamètre (6a), sur un deuxième côté (8) qui est dirigé vers l'extrémité (22) du câble (16),
- la partie du blindage (18) retournée sur la douille (2) est reliée à ladite douille (2) par liaison intermétallique.

2. Câble selon la revendication 1,
**caractérisé en ce que** le blindage (18) est formé par une tresse métallique ou une feuille métallique et / ou q u e le blindage (18) est formé par une feuille métallique en métal non ferreux ou en alliages de celui-ci, en particulier en cuivre ou en alliages de celui-ci ou en aluminium ou en alliages de celui-ci.

3. Câble selon l'une des revendications précédentes,
**caractérisé en ce que** la douille (2) est dotée d'une rainure (10) périphérique, en particulier dans la région du décalage (4), et / ou que la partie du blindage (18) retournée sur la douille (2) est mis à longueur dans la région de la rainure (10).

4. Câble selon l'une des revendications précédentes,
**caractérisé en ce que** la partie du blindage (18) retournée sur la douille (2) porte contre la douille (2) au moins dans la région du deuxième diamètre (8c) et est reliée à la douille (2) par liaison intermétallique, de préférence dans la région du deuxième diamètre (8a).

5. Câble selon l'une des revendications 3 à 4,
**caractérisé en ce que** la partie du blindage (18) retournée sur la douille (2) est reliée par liaison intermétallique à la douille (2), au moins dans la région du deuxième diamètre (18a) par soudure par friction, soudure par résistance ou soudure par ultrasons, en particulier par soudure à la molette par ultrasons ou soudure à la molette par résistance.

6. Procédé de fabrication d'un câble électrique, en particulier d'un câble haute tension, en particulier pour l'utilisation dans un véhicule automobile, qui comprend les étapes consistant
- à dénuder à au moins une extrémité du câble une isolation secondaire qui entoure le blindage,
**caractérisé en ce que**
- une douille est glissée sur le blindage dénudé,
- sachant que la douille est dotée d'un décalage en forme de gradin de sorte que ladite douille (2) présente un premier diamètre sur un premier côté et un deuxième diamètre, plus petit que le premier diamètre, sur un deuxième côté qui est dirigé vers l'extrémité du câble,
- la partie du blindage en saillie au-delà de la douille est retournée sur la douille (2) et
- la partie du blindage retournée sur la douille est reliée à ladite douille par liaison intermétallique.

7. Procédé selon la revendication 6,
**caractérisé en ce que** le blindage est relié à la douille au moyen d'une liaison intermétallique par soudure par ultrasons ou par soudure par résistance.

8. Procédé selon la revendication 7,
**caractérisé en ce que,** pour la liaison intermétallique, une sonotrode pour ultrasons ou une électrode pour soudure par résistance et la douille sont conduites l'une autour de l'autre le long d'un arc de cercle et / ou que ce faisant, de préférence simultanément, la partie du blindage retournée sur la douille est mis à longueur par la sonotrode pour soudure par ultrasons ou par l'électrode pour soudure par résistance.

9. Utilisation d'un câble électrique selon revendication 1 dans un véhicule hybride ou électrique.
